# EUROPEAN PATENT SPECIFICATION

(11) **EP 2 644 506 B1**
(45) Date of publication and mention of the grant of the patent: **03.05.2017**
(21) Application number: 13161167.5
(22) Date of filing: 26.03.2013
(51) Int. Cl.: B64D 31/00, B64D 31/14, F02C 9/28

(54) **Distributed electronic engine control architecture**
Verteilte elektronische Triebwerkssteuerungsarchitektur
Architecture réparti de commande électronique de turboréacteur

(30) Priority: 26.03.2012 US 201213429973
(43) Date of publication of application: 02.10.2013
(73) Proprietor: Hamilton Sundstrand Corporation, Windsor Locks, CT 06096-1010 (US)
(72) Inventor: Roy, Kevin P., West Springfield, MA Massachusetts 01089 (US); Zebrowski, Thaddeus J., Windsor, CT Connecticut 06095 (US)
(74) Representative: Tomlinson, Kerry John

(56) References cited:
- EP-A1- 2 244 148
- EP-A1- 2 441 938
- EP-A2- 2 077 477

## Description

### BACKGROUND OF THE INVENTION

Generally, the present invention is directed to aircraft, and more particularly, exemplary embodiments of the present invention are directed to distributed electronic engine control architectures.

More electric engines may include gas turbine engines with increasingly electrically powered means of activation, including electric actuators and pumps driven by electricity rather than mechanical power. Conventionally, gas turbine electronic engine controls (EEC) include a central controller configured to receive line-by-line electrical value (including voltage, current, frequency, and/or resistance) information from a plurality of individual EEC sensors. This results in significant harness weight between the central controller and an associated engine. Furthermore, if conventional mechanical actuators and pumps are eventually replaced with electrically actuated systems, harness weight increases further, providing a limiting factor in the design and implementation of more electric engines.

EP 2244 148 discloses an aircraft according to the preamble of claim 1.

### BRIEF DESCRIPTION OF THE INVENTION

According to the present invention, an aircraft comprising a distributed electronic control system includes an engine data controller arranged on an airframe of the aircraft and a plurality of engine data concentrators arranged proximate the engine of the aircraft in signal communication with the engine data controller. The engine data controller is configured to process information related to an engine of the aircraft. Also, the plurality of engine data concentrators are configured to receive engine sensor information from a plurality of engine sensors and to transmit the engine sensor information to the engine data controller.

There is further described a distributed electronic control system for an aircraft that includes a plurality of airframe-mounted engine control components arranged on an airframe of the aircraft and a plurality of engine-mounted engine control components mounted engine control components are configured to receive engine sensor information from a plurality of engine sensors and to transmit the engine sensor information to the airframe-mounted engine control components. The plurality of engine-mounted engine control components include a centralized power conditioning system configured to condition and distribute power to the plurality of airframe-mounted engine control components and the plurality of engine-mounted engine control components.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic of a distributed engine control system, according to an exemplary embodiment of the present invention; and
FIG. 2 is a detailed schematic of a distributed engine control system with redundancy, according to an exemplary embodiment of the present invention.

### DETAILED DESCRIPTION

More electric engines may include gas turbine engines with increasingly electrically powered means of activation such as, for example, electric actuators and pumps that are driven by electricity rather than mechanical power. According to exemplary embodiments of the present invention, a distributed electronic engine control (EEC) architecture has been provided which reduces harness weight and complexity as compared to conventional EEC systems. The EEC architecture also provides for more electric engines with increasingly electrically powered means of activation.

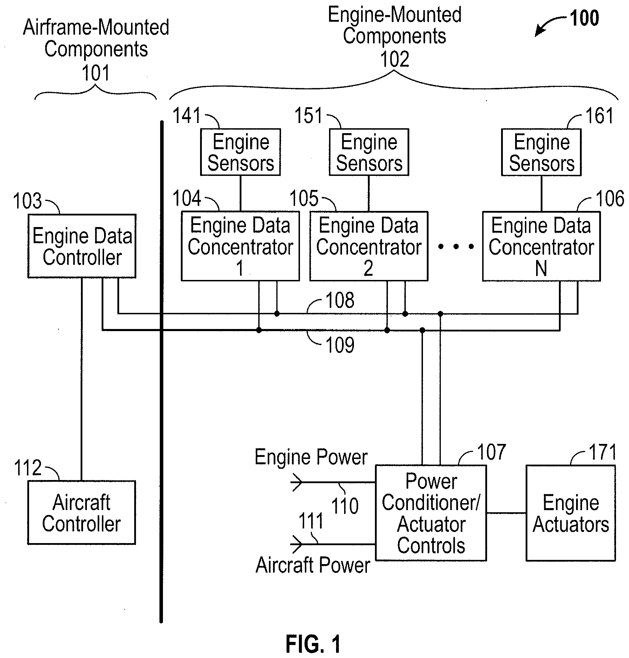

Turning to FIG. 1, a schematic of a distributed engine control system 100 of an aircraft is illustrated. The system 100 includes a plurality of airframe-mounted components 101 and a plurality of engine-mounted components 102. The airframe-mounted components 101 may be control components mounted to an airframe of an aircraft, for example, within an avionics compartment of an airframe of an aircraft. An avionics compartment may be a compartmentalized portion of an airframe of an aircraft with a relaxed environment as compared to an environment proximate an engine. The engine-mounted components 102 may be control components mounted to and/or proximate an aircraft engine, for example, within or on the actual engine or within an engine pylon affixed to a wing section of an aircraft.

The airframe-mounted components may include an aircraft controller 112. The aircraft controller 112 may be any controller suitable for processing information related to an aircraft, including a centralized processor configured to control aircraft operations.

The airframe-mounted components further include an engine data controller 103 in signal communication with the aircraft controller 112. The engine data controller 103 may be a single or dual-channel controller configured to receive electrical power from power bus 108 and data from data bus 109. The engine data controller 103 may process data received to determine actuation adjustments for control of an aircraft engine, for example, pump pressure, actuation position, or any other suitable adjustments. The power bus 108 and the data bus 109 may extend from the airframe-mounted components 101 to the engine-mounted components 102.

The engine mounted components 102 may include a plurality of engine data concentrators 104, 105, and 106 in signal communication with the engine data controller 103 over the data bus 109. Each engine data concentrator 104, 105, and 106 may include an Input / Output portion (I/O), an analog sensor interface associated with the I/O, an analog-to-digital converter (ADC) in communication with the analog sensor interface, and a processor in communication with the ADC. It shall be understood, however, that in some cases, the sensor interface may receive "on" or "off" values from a switch, e.g. a pressure switch, and, in such cases, the sensor need not be an analog sensor and the ADC may be omitted. Power may be received at each engine data concentrator over power bus 108. Thus, associated processors may be powered from the power bus 108, and may perform a plurality of functions related to information received over the analog sensor interface. The received information may be relayed to the engine data controller 103 over data bus 109. The information may be received from associated engine sensors 141, 151, and 161. Each of the engine sensors 141, 151, and 161 may be engine-mounted sensors (e.g., analog temperature sensors, position sensors, pressure sensors etc.) configured to produce an analog signal in response to a change in engine operation (e.g., temperature, position information, pressure, etc.). Therefore, each data concentrator 104, 105, and 106 may "concentrate" engine sensor information, assemble the concentration engine sensor information into at least one data packet, and transmit the data packet to the engine data controller 103 in a controlled manner dictated by any associated communications protocol implemented for the data bus 109. The communications protocol may be designed to be a fast transmission protocol, controller area network protocol, or any other suitable protocol.

Turning back to FIG. 1, the engine-mounted components further include power conditioner / actuator controls 107. The power conditioner / actuator controls 107 may be in signal communication with the data bus 109, and may transmit and receive information from the engine data controller 103. The power conditioner / actuator controls may receive engine power over power bus 110, for example, from a permanent magnet generator generating electricity from an aircraft engine. The power conditioner / actuator controls 107 may also receive aircraft power over power bus 111, for example, from an aircraft battery bank or other power supply. The power conditioner / actuator controls 107 may condition the received power from buses 110 and 111 into power for transmission across power bus 108. Therefore, the power conditioner / actuator controls 107 allow for a centralized power conditioning system mounted on or proximate the aircraft engine which provides conditioned power to a plurality of engine data concentrators. This may reduce overall wire-weight allowing for more efficient aircraft operations. Furthermore, the power conditioner / actuator controls 107 may provide conditioned power to a plurality of electric engine actuators 171 based on control information received from engine data controller 103 over data bus 109. As such, overall wire weight is further reduced while allowing for more electric engine controls distributed across airframe-mounted and engine-mounted components.

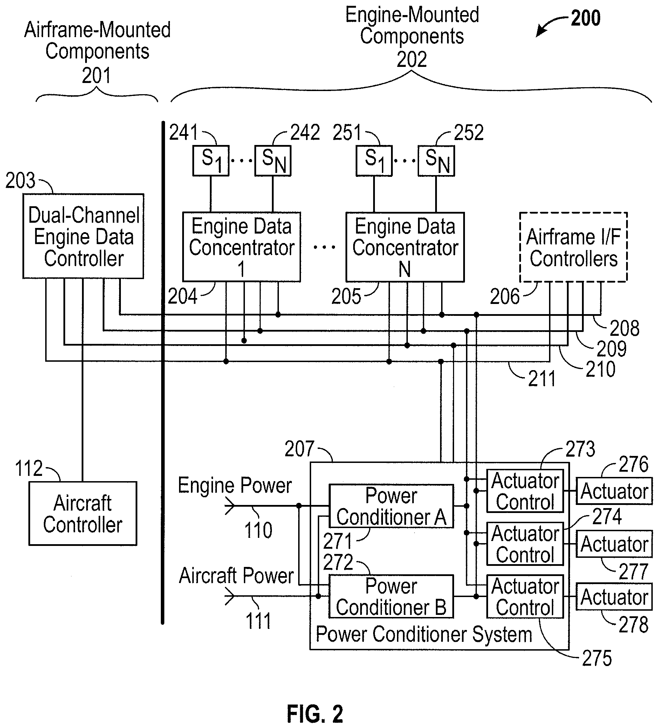

Although particularly illustrated and described as having singular power and data buses, it should be understood that the same may be varied in many ways to allow for increased redundancy while still realizing reduced wire weight and increased engine efficiency. For example, a distributed engine control system 200 with both power and data bus redundancy is illustrated in FIG. 2, according to an exemplary embodiment of the present invention.

The system 200 includes a plurality of airframe-mounted components 201 and a plurality of engine-mounted components 202. The airframe-mounted components 201 may be control components mounted to an airframe of an aircraft, for example, within an avionics compartment of an airframe of an aircraft. The engine-mounted components 202 may be control components mounted to and/or proximate an aircraft engine, for example, within or on the actual engine or within an engine pylon affixed to a wing section of an aircraft.

The airframe-mounted components may include the aircraft controller 112 described above.

The airframe-mounted components further include a dual-channel engine data controller 203 in signal communication with the aircraft controller 112. The engine data controller 203 may be controller configured to receive electrical power from power buses 208 and 209, and data from data buses 210 and 211. The engine data controller 203 may process data received to determine actuation adjustments for control of an aircraft engine, for example, pump pressure, actuation position, or any other suitable adjustments. The power buses 208-209 and the data buses 210-211 may extend from the airframe-mounted components 201 to the engine-mounted components 202.

The engine mounted components 202 may include a plurality of engine data concentrators 204 and 205 in signal communication with the engine data controller 203 over the data buses 210-211. Each engine data concentrator 204-205 may include an Input / Output portion (I/O), an analog sensor interface associated with the I/O, an analog-to-digital converter (ADC) in communication with the analog sensor interface, and a processor in communication with the ADC. Power may be received at each engine data concentrator over power buses 208-209. Thus, associated processors may be powered from the power buses 208-209, and may perform a plurality of functions related to information received over the analog sensor interface. The received information may be relayed to the engine data controller over data buses 208-209. The information may be received from associated engine sensors 241, 242, 251, and 252. Each of the engine sensors 241, 242, 251, and 252 may be engine-mounted sensors (e.g., analog temperature sensors, position sensors, pressure sensors etc.) configured to produce an analog signal in response to a change in engine operation (e.g., temperature, position information, pressure, etc.). Therefore, each data concentrator 204-205 may "concentrate" engine sensor information, assemble the concentration engine sensor information into at least one data packet, and transmit the data packet to the engine data controller 203 in a controlled manner dictated by any associated communications protocol implemented for the data buses 210-211. The communications protocol may be designed to be a fast transmission protocol, controller area network protocol, or any other suitable protocol.

Turning back to FIG. 2, the engine-mounted components further include optional airframe interface controllers 206 in communication with the engine data controller 203 over data buses 210-211, and configured to receive power from power buses 208-209. The airframe interface controllers 206 may include air supply controllers, bleed controllers, or any other controllers which may be integrated with data buses 210-211, which may therefore further reduce wire weight. The airframe interface controllers 206 may receive associated control information from the engine data controller 203 which may be relayed from aircraft controller 112 (e.g., associated bleed air flow measurements, etc.). The airframe interface controllers 206 may also transmit information to the engine data controller 203 over data buses 210-211.

Turning back to FIG. 2, the engine-mounted components further include power conditioner system 207. The power conditioner system 207 may be in signal communication with the data buses 210-211, and may transmit and receive information from the engine data controller 203.

The power conditioner system 207 may include at least two power conditioners 271 and 272 disposed to condition power received from engine power over power bus 110, for example, from a permanent magnet generator generating electricity from an aircraft engine. The power conditioners 271 and 272 may also receive aircraft power over power bus 111, for example, from an aircraft battery bank or other power supply. The power conditioners 271 and 272 may condition the received power from buses 110 and 111 into power for transmission across power buses 208 and 209. Furthermore, the power conditioners 271 and 272 may provide conditioned power to a plurality of electric engine actuator controls 273, 274, and 275 integrated in the power conditioner system 207. Each electric engine actuator control 273, 274, and 275 may control an associated actuator 276, 277, and 278 based on control information received from engine data controller 203 over data buses 210-211.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An aircraft comprising a distributed electronic control system (100; 200), comprising:
an engine data controller (103; 203), wherein the engine data controller is configured to process information related to an engine of the aircraft; and
a plurality of engine data concentrators (104, 105, 106; 204, 205) in signal communication with the engine data controller, wherein the plurality of engine data concentrators are configured to receive engine sensors information from a plurality of engine sensors (141, 151, 161; 241, 242, 251, 252) and to transmit the engine sensor information to the engine data controller, the plurality of engine data concentrators being arranged proximate the engine; and
a power conditioner system (107; 207) disposed proximate the engine of the aircraft and configured to condition electrical power received from the engine, the power conditioner system receiving actuator control information from the engine data controller, and the power conditioner system being configured to provide conditioned power to a plurality of engine actuators (171; 276, 277, 278) based on the actuator control information received from the engine data controller,
**characterised in that** the engine data controller (103; 203) is arranged on an airframe of the aircraft.

2. The aircraft of claim 1, further comprising at least one data bus (109; 210, 211) arranged between the engine data controller and the plurality of engine data concentrators.

3. The aircraft of claim 2, wherein the at least one data bus is a controller area network data bus.

4. The aircraft of any preceding claim, wherein each engine data concentrator of the plurality of engine data concentrators comprises:
an engine sensor interface; and
a processor in communication with the engine sensor interface.

5. The aircraft of claim 4, wherein each engine sensor interface is an analog engine sensor interface disposed to receive analog engine information from a plurality of analog engine sensors.

6. The aircraft of claim 5, wherein each data concentrator of the plurality of data concentrators further comprises:
an analog-to-digital converter in communication with the analog engine sensor interface and the processor.

7. The aircraft of claim 4, 5 or 6, wherein each processor of each engine data concentrator is configured to accumulate engine sensor information received from an associated engine sensor interface and transmit the accumulated engine sensor information to the engine data controller.

8. The aircraft of any preceding claim, wherein the engine data controller is a dual-channel engine data controller and wherein the system further comprises:
redundant data buses arranged between the engine data controller and the plurality of engine data concentrators.

9. The aircraft of claim 8, wherein the redundant data buses are controller area network data buses.

## Patentansprüche

1. Luftfahrzeug, umfassend ein verteiltes elektronisches Steuerungssystem (100; 200), umfassend:
eine Triebwerksdatensteuerung (103; 203), wobei die Triebwerksdatensteuerung konfiguriert ist, um auf ein Triebwerk des Luftfahrzeugs bezogene Informationen zu verarbeiten; und
eine Vielzahl von Triebwerksdatenkonzentratoren (104, 105, 106; 204, 205), die in Signalverbindung mit der Triebwerksdatensteuerung stehen, wobei die Vielzahl von Triebwerksdatenkonzentratoren konfiguriert ist, um Triebwerkssensorinformationen von einer Vielzahl von Triebwerkssensoren (141, 151, 161; 241, 242, 251, 252) zu empfangen und die Triebwerkssensorinformationen an die Triebwerksdatensteuerung zu übertragen, wobei die Vielzahl von Triebwerksdatenkonzentratoren nahe des Triebwerks angeordnet ist; und
ein Leistungskonditionierersystem (107; 207), das nahe des Triebwerks des Luftfahrzeugs angebracht und konfiguriert ist, um von dem Triebwerk empfangenen elektrischen Strom zu konditionieren, wobei das Leistungskonditionierersystem Aktorsteuerungsinformationen von der Triebwerksdatensteuerung empfängt und das Leistungskonditioniersystem konfiguriert ist, um konditionierten Strom auf Grundlage von von der Triebwerkdatensteuerung empfangenen Aktorsteuerungsinformationen an einer Vielzahl von Triebwerksaktoren (171; 276, 277, 278) bereitzustellen,
**dadurch gekennzeichnet, dass** die Triebwerksdatensteuerung (103; 203) auf einem Flugwerk des Luftfahrzeugs angeordnet ist.

2. Luftfahrzeug nach Anspruch 1, das ferner zumindest einen Datenbus (109; 210, 211) umfasst, der zwischen der Triebwerksdatensteuerung und der Vielzahl von Triebwerksdatenkonzentratoren angeordnet ist.

3. Luftfahrzeug nach Anspruch 2, wobei der zumindest eine Datenbus ein Controller-Area-Network-Datenbus ist.

4. Luftfahrzeug nach einem der vorhergehenden Ansprüche, wobei jeder Triebwerksdatenkonzentrator der Vielzahl von Triebwerksdatenkonzentratoren Folgendes umfasst:
eine Triebwerkssensorschnittstelle; und
einen mit der Triebwerkssensorschnittstelle in Verbindung stehenden Prozessor.

5. Luftfahrzeug nach Anspruch 4, wobei jede Triebwerkssensorschnittstelle eine analoge Triebwerkssensorschnittstelle ist, die angebracht ist, um analoge Triebwerksinformationen von einer Vielzahl von analogen Triebwerkssensoren zu empfangen.

6. Luftfahrzeug nach Anspruch 5, wobei jeder Datenkonzentrator der Vielzahl von Datenkonzentratoren ferner Folgendes umfasst:
einen Analog-Digital-Wandler, der mit der analogen Triebwerkssensorschnittstelle und dem Prozessor in Verbindung steht.

7. Luftfahrzeug nach Anspruch 4, 5 oder 6, wobei jeder Prozessor von jedem Triebwerksdatenkonzentrator konfiguriert ist, um von einer zugeordneten Triebwerkssensorschnittstelle empfangene Triebwerkssensorinformationen zu sammeln und die gesammelten Triebwerkssensorinformationen an die Triebwerksdatensteuerung zu übertragen.

8. Luftfahrzeug nach einem der vorhergehenden Ansprüche, wobei die Triebwerksdatensteuerung eine zweikanalige Triebwerksdatensteuerung ist und wobei das System ferner Folgendes umfasst:
redundante Datenbusse, die zwischen der Triebwerksdatensteuerung und der Vielzahl von Triebwerksdatenkonzentratoren angeordnet sind.

9. Luftfahrzeug nach Anspruch 8, wobei die redundanten Datenbusse Controller-Area-Network-Datenbusse sind.

## Revendications

1. Aéronef comprenant un système de commande électronique répartie (100 ; 200), comprenant :
un contrôleur de données moteur (103 ; 203), dans lequel le contrôleur de données moteur est configuré pour traiter des informations liées à un moteur de l'aéronef ;
et
une pluralité de concentrateurs de données moteur (104, 105, 106 ; 204, 205) en communication de signal avec le contrôleur de données moteur, dans lequel la pluralité de concentrateurs de données moteur est configurée pour recevoir des informations de capteurs de moteur provenant d'une pluralité de capteurs de moteur (141, 151, 161 ; 241, 242, 251, 252) et pour émettre les informations de capteurs de moteur vers le contrôleur de données moteur, la pluralité de concentrateurs de données moteur étant agencée à proximité du moteur ; et
un système de conditionneur d'énergie (107 ; 207) disposé à proximité du moteur de l'aéronef et configuré pour conditionner l'énergie électrique reçue depuis le moteur, le système de conditionneur d'énergie recevant des informations de commande d'actionneurs en provenance du contrôleur de données moteur, et le système de conditionneur d'énergie étant configuré pour fournir de l'énergie conditionnée à une pluralité d'actionneurs de moteur (171 ; 276, 277, 278) sur la base des informations de commande d'actionneurs reçues depuis le contrôleur de données moteur,
**caractérisé en ce que** le contrôleur de données moteur (103 ; 203) est agencé sur une cellule de l'aéronef.

2. Aéronef selon la revendication 1, comprenant en outre au moins un bus de données (109 ; 210, 211) agencé entre le contrôleur de données moteur et la pluralité de concentrateurs de données moteur.

3. Aéronef selon la revendication 2, dans lequel l'au moins un bus de données est un bus de données de réseau de zones de contrôleur.

4. Aéronef selon l'une quelconque revendication précédente, dans lequel chaque concentrateur de données moteur de la pluralité de concentrateurs de données moteur comprend :
une interface capteur-moteur ; et
un processeur en communication avec l'interface capteur-moteur.

5. Aéronef selon la revendication 4, dans lequel chaque interface capteur-moteur est une interface capteur-moteur analogique disposée pour recevoir des informations de moteur analogiques provenant d'une pluralité de capteurs de moteur analogiques.

6. Aéronef selon la revendication 5, dans lequel chaque concentrateur de données de la pluralité de concentrateurs de données comprend en outre :
un convertisseur analogique-numérique en communication avec l'interface capteur-moteur analogique et le processeur.

7. Aéronef selon la revendication 4, 5 ou 6, dans lequel chaque processeur de chaque concentrateur de données de moteur est configuré pour accumuler des informations de capteurs de moteur reçues depuis une interface capteur-moteur associée et pour émettre les informations de capteurs de moteur accumulées vers le contrôleur de données moteur.

8. Aéronef selon l'une quelconque revendication précédente, dans lequel le contrôleur de données moteur est un contrôleur de données moteur bi-canal et dans lequel le système comprend en outre :
des bus de données redondantes agencés entre le contrôleur de données moteur et la pluralité de concentrateurs de données moteur.

9. Aéronef selon la revendication 8, dans lequel les bus de données redondantes sont des bus de données de réseau de zones de contrôleur.
